# EUROPÄISCHE PATENTSCHRIFT

(11) **EP 2 782 654 B1**
(45) Veröffentlichungstag und Bekanntmachung des Hinweises auf die Patenterteilung: **13.04.2016**
(21) Anmeldenummer: 12790431.6
(22) Anmeldetag: 21.11.2012
(51) Int. Cl.: B01D 29/11, B01D 29/21

(54) **FILTERMATERIAL**
FILTER MATERIAL
MATERIAU FILTRANT

(30) Priorität: 21.11.2011 DE 102011119408
(43) Veröffentlichungstag der Anmeldung: 01.10.2014
(73) Patentinhaber: Hydac Filtertechnik GmbH, 66280 Sulzbach/Saar (DE)
(72) Erfinder: KOCH, Edwin, 66636 Tholey (DE); SCHWENDER, Matthias, 66459 Kirkel (DE); SCHMITZ, Andreas, 66459 Kirkel (DE); JOCHUM, Stefan, 66557 Hüttigweiler (DE)
(74) Vertreter: Bartels, Martin Erich Arthur
(86) Internationale Anmeldenummer: PCT/EP2012/004813
(87) Internationale Veröffentlichungsnummer: WO 2013/075820

(56) Entgegenhaltungen:
- DE-A1- 2 138 412
- DE-A1- 10 144 867
- DE-B- 1 121 438
- US-A- 3 520 417

## Beschreibung

Die Erfindung betrifft ein Filtermaterial, insbesondere für Hydraulikanlagen, mit den Merkmalen im Oberbegriff von Anspruch 1.

Filtermaterialien werden in einer Vielzahl von Ausführungsformen zum Abscheiden von Feststoff-Partikeln aus flüssigen Medienströmen oder zum Abscheiden von Staubpartikeln aus einem mit Staubpartikeln beladenen Gasstrom verwendet. Die abzuscheidenden Partikel-Verschmutzungen stören industrielle Prozesse oder den Betrieb von Hydrauliksystemen und beschleunigen den Verschleiß von Maschinen und Anlagen.

Wenn die Filtermaterialien bei Filterelementen für Geräte oder Anlagen zum Einsatz kommen, beispielsweise bei Hydrauliksystemen zur Filtration von Hydrauliköl, dann ist es aus Sicherheitsgründen und auch aus wirtschaftlichen Gründen heraus erforderlich, dass die im Einsatz befindlichen Filterelemente über die vorgesehenen Einsatzzeiten hinweg ihre volle Leistungsfähigkeit erbringen. Fehlfunktionen der Filterelemente würden Betriebsstörungen bis hin zum Ausfall der zugehörigen Anlagen verursachen, was, insbesondere bei höherwertigen Anlagen, zu beträchtlichen wirtschaftlichen Schäden führen kann. Beim Betrieb von Filterelementen mit plissierten oder sterngefalteten Filtermaterialien ist eine mögliche Ursache einer Fehlfunktion darin zu sehen, dass beim Durchströmen mit viskosen Fluiden und/oder bei hohen Volumenströmen es zu einer sog. "Faltenblockbildung" kommt. Dabei werden mehrere Falten aufgrund des sich einstellenden Differenzdruckes zusammengedrückt, und es entsteht ein Block aus mehreren Falten. Durch die verblockten Falten fließt dann aufgrund der verengten Strömungskanäle entsprechend wenig Fluid. Der Volumenstrom wird durch die restlichen, verbleibenden Kanäle geleitet, wodurch der Differenzdruck zwischen der Schmutz- und der Reinseite ansteigt. In den Bereichen verringerten Durchflusses findet auch eine entsprechend verminderte Schmutzaufnahme statt. Außerdem können Relativbewegungen zwischen einzelnen Lagen des Filtermaterials verursacht werden.

Ein Lösungsvorschlag zur Behebung dieser Fehlerquellen, der in DE 10 2004 054 245 A1 offenbart ist, zielt diesbezüglich auf eine Stabilisferung der Faltengeometrie bei einem gefalteten Filtermaterial ab, das in Form eines Hohlzylinders Bestandteil eines Filterelements ist. Zu diesem Zweck sind bei der bekannten Lösung Stabilisiermittel in Form bandförmiger Ringelemente vorgesehen, die um die Außenseite des Filtermaterials herumgelegt sind, wobei als Fixiermittel an den Innenseiten der Bänder Verbindungsstellen mit den anliegenden Faltenrücken des Filtermaterials gebildet sind. Die Verbindungsstellen sind jeweils durch Schweißstellen gebildet, an denen durch thermischen Prozess die Werkstoffe der äußeren Lage des Filtermaterials und des anliegenden Bandes miteinander verschmolzen sind.

Bei der großen Anzahl plissierter Falten des Filtermaterials muss in einem gesonderten Fertigungsschritt, der nach dem Faltprozess bei der Herstellung der Filtermatte und nach dem Bilden des Hohlzylinders aus der Filtermatte durchzuführen ist, eine Vielzahl von Schweißvorgängen ausgeführt werden, was die Herstellung kompliziert und verteuert.

Die DE 101 44 867 A1 offenbart ein Filtermaterial, insbesondere für Hydraulikanlagen, mit einer vorzugsweise aus mehreren Lagen eines Filtermediums bestehenden Filtermatte, die mit einer Folge plisseeartiger Falten versehen ist, wobei zur Sicherung der Faltengeometrie gegen Verformung mindestens ein an Teilbereichen der Filtermatte angreifendes Stabilisiermittel vorgesehen ist, wobei die Filtermatte als Stabilisiermittel mindestens eine weitere gefaltete Lage aus einem versteifenden Stützmaterial aufweist, wobei die jeweilige Lage des Stützmaterials die Form zumindest eines flachen Bandes besitzt. Die Lage aus dem versteifenden Stützmaterial ist in Form eines Stützgitters ausgebildet, das sich über die gesamte Höhe des Filterelements erstreckt.

Aus der US 3 520 417, der DE 11 21 438 und der DE 21 38 412 gehen jeweils Filterelemente hervor, bei denen zwischen den einzelnen Filterfalten Abstandshalter vorgesehen sind. Diese Abstandshalter können in Form von Papierstreifen oder Klebstoffwülsten ausgebildet sein.

Ausgehend von diesem Stand der Technik stellt sich die Erfindung die Aufgabe, ein Filtermaterial zur Verfügung zu stellen, das einfach und rationell herstellbar ist und sich durch eine hohe Stabilität der Faltengeometrie auszeichnet.

Erfindungsgemäß ist diese Aufgabe durch ein Filtermaterial gelöst, das die Merkmale des Patentanspruchs 1 in seiner Gesamtheit aufweist.

Eine wesentliche Besonderheit der Erfindung besteht demgemäß darin, dass die Breite des Bandes oder mehrerer Bänder zusammen geringer als ein Viertel der Breite der Filtermatte in Faltenlängsrichtung gemessen ist.

Die Filtermatte enthält zumindest eine mitgefaltete Zusatzlage aus einem Stützmaterial. Die so gebildete Versteifung durch einen "inneren Stern", der die gleiche Geometrie wie die übrigen Filterfalten besitzt, verstärkt jede einzelne Falte, hält die einzelnen Falten auf Abstand und stabilisiert dadurch die gesamte Faltenstruktur.

Weiter bevorzugt ist das Band mittig zur Filtermatte angeordnet. Wenn mehrere Bänder vorgesehen sind, sind diese bevorzugt symmetrisch über die Filterlänge verteilt angeordnet.

Zweckmäßigerweise ist die jeweilige Lage des Stützmaterials fluiddurchlässig. Auf diese Weise stellt das Stützmaterial einen geringen Widerstand für das durchströmende Fluid dar.

Die jeweilige Lage des Stützmaterials ist mit Vorteil derart biegeelastisch, dass sie beim Falten der Filtermatte nicht bricht.

Mit besonderem Vorteil kann die jeweilige Lage des Stützmaterials an zumindest einer Seite der Filtermatte deren äußere Lage bilden. Die Lage des Stützmaterials kann hierbei an die bereits gebildete Filtermatte angelegt und bei der Durchführung des Faltprozesses zusammen mit den übrigen Lagen eingefaltet werden, was eine besonders einfache und rationelle Herstellung des Filtermaterials ermöglicht.

Die jeweilige Lage des Stützmaterials kann aus einem Faser-Grundmaterial, vorzugsweise aus Karbon- oder Glasfaser, imprägniert mit Harz, bestehen. Ein derartiges Prepreg-Material kann mit einer abgestimmten Menge an Harz derart versehen sein, dass das Material beim Faltprozess aufgrund der gegebenen Prozessparameter aushärtet oder in einem weiteren Schritt mittels Wärmeeintrag ausgehärtet wird. Hieraus ergibt sich eine sehr steife Grundstruktur für die Filtermatte. Des Weiteren besteht die Möglichkeit, mehrere Versteifungsbänder in Übereinanderanordnung unter Beibehalten eines vorgebbaren Abstandes an der Filtermatte als integrierter Bestandteil derselben anzuordnen und/oder eine oder mehrere Versteifungsbänder mit Helixstruktur vergleichbar einzusetzen.

Es kann auch so vorgegangen werden, dass betreffende Lagen des Stützmaterials durch Aufbringen von Raupen aus Harz auf die Filtermatte gebildet werden, wobei die Harzraupen nach dem Plissieren ausgehärtet werden.

Aufgrund des Erwärmens des Harzes beim Aushärten kann das Stützmaterial vorteilhaft eine geschlossene Oberfläche aufweisen.

Gemäß dem Patentanspruch 12 ist Gegenstand der Erfindung auch ein Verfahren zum Herstellen eines Filtermaterials nach einem der Ansprüche 1 bis 11, bei dem eine vorzugsweise aus mehreren Lagen bestehende Filtermatte mit aufeinanderfolgenden, plisseeartigen Falten versehen wird. Die Filtermatte wird zusammen mit zumindest einer weiteren, aus einem versteifenden Stützmaterial bestehenden Lage gefaltet.

Vorteilhaft bildet die aus Stützmaterial bestehende Lage eine innere Lage der Filtermatte.

Zweckmäßigerweise wird ein fluiddurchlässiges Stützmaterial verwendet.

Weiterhin kann ein Stützmaterial verwendet werden, das derart biegeelastisch ist, dass es beim Falten der Filtermatte nicht bricht.

Nachstehend ist die Erfindung anhand eines in der Zeichnung dargestellten Ausführungsbeispiels im Einzelnen erläutert. Es zeigen:
- Fig. 1: eine schematische, skizzenhafte Darstellung zur Verdeutlichung des Verfahrens zur Herstellung eines Ausführungsbeispiels des erfindungsgemäßen Filtermaterials; und
- Fig. 2: eine perspektivische Ansicht eines Teiles eines Ausführungsbeispiels des erfindungsgemäßen Filtermaterials, teilweise geformt zu einem für ein Filterelement vorgesehenen Hohlzylinder.

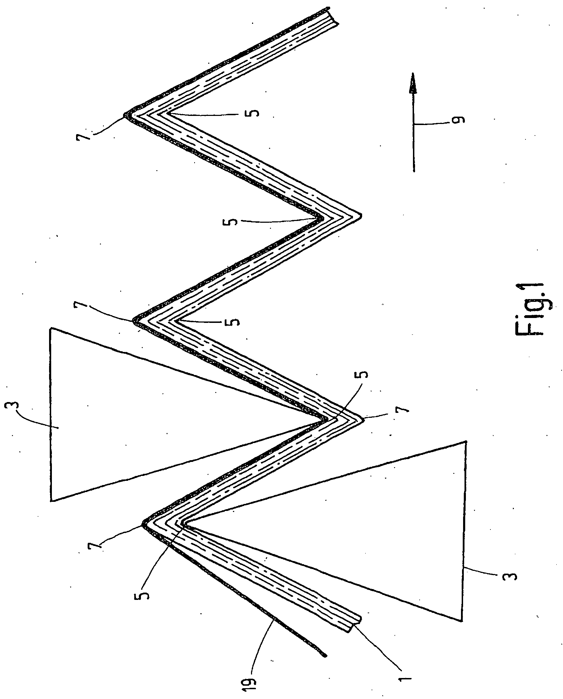

Die Fig. 1 verdeutlicht den Vorgang der Faltenbildung an einer Filtermatte 1 mittels einer Messerfaltmaschine mit gegenläufig bewegbaren Faltmessern 3. Bei der gegenläufigen Bewegung der Faltmesser 3 bilden diese beim Angriff an der Filtermatte 1 jeweils einen Faltengrund 5 mit dazu gegenüberliegendem Faltenrücken 7, während die Filtermatte 1 in der mit Pfeil 9 angedeuteten Vorschubrichtung bewegt wird. Wie in Fig. 1 mit durchgezogenen, gestrichelten und strichpunktierten Linien angedeutet ist, ist die Filtermatte 1 aus mehreren Einzellagen von Filtermedien aufgebaut, wobei in Abfolge beispielsweise ein Stützgitter, ein Vliesmaterial, ein Fasermaterial, ein Vliesmaterial und ein Stützgitter vorgesehen sein können und wobei es sich um einen metallfreien Aufbau handelt. In vorteilhafter Weise kann es sich bei einer Einzellage der Filtermatte 1 auch um einen Verbund von chaotisch übereinandergelegten Glasfasern und Kohlenstoff-Fasern handeln, wobei die Glasfasern aus einem mineralischen Glas, aus Borosilikat-Glas, gebildet sein können und der Verbund ferner zusätzliche Anteile an Schmelzfasern aus Kunststoff aufweisen kann, etwa aus Polyethylen, Polyamid und Polypropylen.

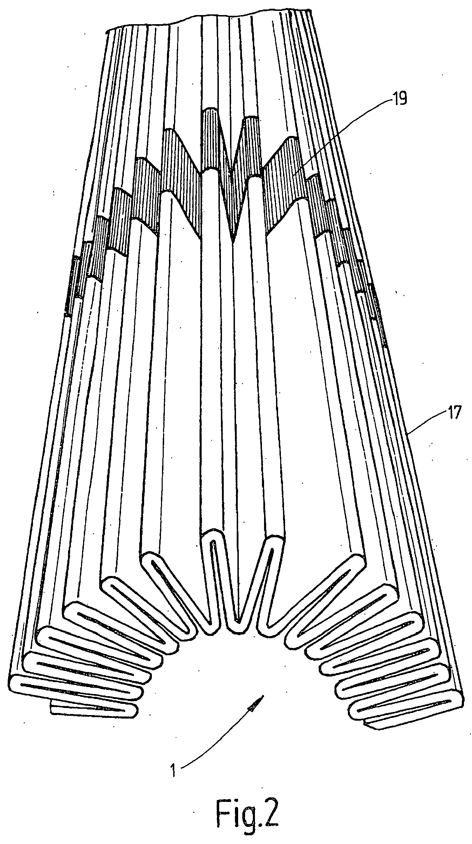

Das erfindungsgemäße Filtermaterial lässt sich mit Vorteil bei Filterelementen in der Art von Filterpatronen einsetzen. Hierbei kann die Filtermatte 1 zu einem Hohlzylinder, wie er in Fig. 2 halbfertig dargestellt und mit 17 bezeichnet ist, geformt sein. Wie Fig. 2 ebenfalls zeigt, weist das mit der Filtermatte 1 gebildete, erfindungsgemäße Filtermaterial als zusätzliche, zusammen mit den übrigen Medienlagen der Filtermatte 1 gefaltete, zusätzliche Lage ein Stützmaterial 19 auf, wobei dieses Stützmaterial 19 als flaches Band an einer Außenseite der Filtermatte 1 sich über die gesamte Länge der Faltenfolge erstreckt. Das Stützmaterial 19 bildet, da es entsprechend der Faltengeometrie der übrigen Lagen der Filtermatte 1 gefaltet ist, eine Art Versteifungsstern, der die Faltengeometrie gegen Verformungen sichert. Während in Fig. 2 lediglich ein Band des Stützmaterials 19 gezeigt ist, versteht es sich, dass mehr als ein Band des Stützmaterials 19 vorgesehen sein kann, wobei die Breite des jeweiligen Bandes und die Anzahl der Bänder so gewählt sind, dass keine ins Gewicht fallende Verringerung der wirksamen Filterfläche resultiert.

Die Fig. 1 zeigt, dass an einer Seite der Filtermatte 1 eine Lage des Stützmaterials 19 mit den übrigen Lagen der Filtermatte 1 mitgefaltet wird. Ebenso könnte an beiden Außenseiten der Filtermatte 1 eine Lage des Stützmaterials 19 mit eingefaltet sein. Auch könnte eine Lage oder mehrere Lagen an Stützmaterial 19 in die Lagen der Filtermedien der Filtermatte 1 eingearbeitet sein, aus einem Verstärkungsmaterial, das beim Faltprozess aushärtet oder anschließend durch Wärmeeintrag ausgehärtet wird. In diesem Fall, wie auch bei außenliegenden Lagen des Stützmaterials 19, wie es in Fig. 1 beispielhaft gezeigt ist, kann als Stützmaterial ein Prepreg-Material vorgesehen sein, vorzugsweise aus einem Grundmaterial aus Karbon- oder Glasfaser, wobei die zugehörige Menge an Harz derart abgestimmt ist, dass das Stützmaterial 19 beim Faltprozess aushärtet oder in einem weiteren Schritt mittels Wärmeeintrag ausgehärtet wird. Besonders bevorzug ist vorgesehen, dass die Stützlage, besonders bevorzugt, in Bandform auf der Innenseite des zylindrischen Filterelementmantels mit eingefaltet ist.

Anstelle des in den Figuren gezeigten flachen Bandes des Stützmaterials 19 könnte als Vorbehandlung der Filtermatte 1 eine oder mehrere Raupen aus Harz zur Bildung von Stützmateriallagen auf die Filtermatte 1 aufgebracht und nach Durchführen des Faltvorganges ausgehärtet werden. Die angesprochene Lage des Stützmaterials 19 kann wie vorstehend dargelegt außen oder innen umfangsseitig am plissierten Filtermattenmaterial anliegen. Des Weiteren kann zusätzlich oder alternativ die Lage des Stützmaterials 19 zwischen den inneren Filtermateriallagen der Filtermatte 1 angeordnet sein. Dabei können alle vorhandenen Zwischenräume zwischen den Filtermateriallagen das Stützmaterial 19 aufweisen oder nur vorgebbare bestimmte Zwischenräume, gegebenenfalls auch nur ein Zwischenraum. Ferner kann in Axialrichtung des Filterelements gesehen das Stützmaterial 19 mehrfach Teil der Filtermatte 1 sein. Je nach Beanspruchung kann bei einer bandartigen Ausgestaltung des Stützmaterials 19 dieses dann auch unterschiedliche Breiten haben, insbesondere in der Mitte des Filterelements 1 eine größere Breite aufweisen denn im Bereich der jeweiligen Stirnseite der Filtermatte 1. Auch können die Materialien dahingehend unterschiedlich für das Stützmaterial 19 ausgewählt werden. So kann das Filterelement im mittleren Bereich, wo der höchste Berstdruck wirkt, ein oder mehrere Streifen des Stützmaterials 19 mit hoher Festigkeit aufweisen gegenüber den genannten endseitigen Randbereichen.

Sofern die jeweils versteifende Lage entsprechend aus geeignetem Versteifungsmaterial besteht oder in der Art eines sehr groben Gewebes oder netzartigen Gebildes ausgestaltet ist, kann die jeweilige Lage auch innen- und/ oder außenumfangsseitig das bekannte Stützrohr bei Filterelementen vollständig ersetzen. Insbesondere bei kleineren Differenzdrücken ist dies eine geeignete Lösung, um auf den kostenintensiven Stützrohraufbau des Filter-elementes zu verzichten.

## Patentansprüche

1. Filtermaterial, insbesondere für Hydraulikanlagen, mit einer vorzugsweise aus mehreren Lagen eines Filtermediums bestehenden Filtermatte (1), die mit einer Folge plisseeartiger Falten (5, 7) versehen ist, wobei zur Sicherung der Faltengeometrie gegen Verformung mindestens ein an Teilbereichen der Filtermatte (1) angreifendes Stabilisiermittel (19) vorgesehen ist, wobei die Filtermatte (1) als Stabilisiermittel mindestens eine weitere gefaltete Lage (19) aus einem versteifenden Stützmaterial aufweist, wobei die jeweilige Lage (19) des Stützmaterials die Form zumindest eines flachen Bandes besitzt, **dadurch gekennzeichnet, dass** die Breite des Bandes oder mehrerer Bänder zusammen geringer ist als ein Viertel der Breite der Filtermatte (1) in Faltenlängsrichtung gemessen.

2. Filtermaterial nach Anspruch 1, **dadurch gekennzeichnet, dass** zumindest ein Band mittig zur Filtermatte (1) angeordnet ist.

3. Filtermaterial nach Anspruch 1 oder 2, **dadurch gekennzeichnet, dass** mehrere Bänder symmetrisch über die Filterlänge verteilt angeordnet sind.

4. Filtermaterial nach einem der vorstehenden Ansprüche, **dadurch gekennzeichnet, dass** die jeweilige Lage (19) des Stützmaterials fluiddurchlässig ist.

5. Filtermaterial nach einem der vorstehenden Ansprüche, **dadurch gekennzeichnet, dass** die jeweilige Lage (19) des Stützmaterials derart biegeelastisch ist, dass sie beim Falten der Filtermatte (1) nicht bricht.

6. Filtermaterial nach einem der vorstehenden Ansprüche, **dadurch gekennzeichnet, dass** die jeweilige Lage (19) des Stützmaterials an zumindest einer Seite der Filtermatte (1) deren äußere und/oder zumindest eine innere Lage bildet.

7. Filtermaterial nach einem der vorstehenden Ansprüche, **dadurch gekennzeichnet, dass** die jeweilig Lage (19) des Stützmaterials aus einem Faser-Grundmaterial, vorzugsweise aus Karbon- oder Glasfaser, imprägniert mit Harz, besteht.

8. Filtermaterial nach einem der vorstehenden Ansprüche, **dadurch gekennzeichnet, dass** das Grundmaterial der jeweiligen Lage (19) des Stützmaterials aus einem Gewebe, einem Schlauch, Endlosfäden oder Rovings besteht.

9. Filtermaterial nach einem der vorstehenden Ansprüche, **dadurch gekennzeichnet, dass** die jeweilige Lage (19) des Stützmaterials beim Faltvorgang der Filtermatte (1) oder durch einen Wärmeeintrag aushärtbar ist.

10. Verfahren zum Herstellen eines Filtermaterials nach einem der Ansprüche 1 bis 9, bei dem eine vorzugsweise aus mehreren Lagen bestehende Filtermatte (1) mit aufeinanderfolgenden, plisseeartigen Falten (5, 7) versehen wird, **dadurch gekennzeichnet, dass** die Filtermatte (1) zusammen mit zumindest einer weiteren, aus einem versteifenden Stützmaterial bestehenden Lage (19) gefaltet wird.

11. Verfahren nach Anspruch 10, **dadurch gekennzeichnet, dass** die aus Stützmaterial bestehenden Lage (19) eine innere Lage der Filtermatte (1) bildet.

12. Verfahren nach Anspruch 10 oder 11, **dadurch gekennzeichnet, dass** ein fluiddurchlässiges Stützmaterial verwendet wird.

13. Verfahren nach einem der Ansprüche 10 bis 12, **dadurch gekennzeichnet, dass** ein Stützmaterial verwendet wird, das derart biegeelastisch ist, dass es beim Falten der Filtermatte (1) nicht bricht.

## Claims

1. A filter material, in particular for hydraulic installations, that has a filter mat (1) preferably consisting of a number of layers of a filter medium and which is provided with a succession of pleat-like folds (5, 7), wherein, in order to secure the fold geometry against deformation, at least one stabilising means (19) which acts on portions of the filter mat (1) is provided, the filter mat (1) having as stabilising means at least one further folded layer (19) of a reinforcing supporting material, the respective layer (19) of supporting material being in the form of at least one flat strip, **characterised in that** the width of the strip or of the plurality of strips taken together is smaller than a quarter of the width of the filter mat (1) in the longitudinal direction of the folds.

2. The filter material according to Claim 1, **characterised in that** at least one strip is positioned centrally in relation to the filter mat (1).

3. The filter material according to Claim 1 or 2, **characterised in** a number of strips are arranged distributed symmetrically over the length of the filter.

4. The filter material according to any of the preceding claims, **characterised in that** the respective layer (19) of supporting material is permeable to fluid.

5. The filter material according to any of the preceding claims, **characterised in that** the respective layer (19) of supporting material is flexurally elastic so that it does not break when folding the filter mat (1).

6. The filter material according to any of the preceding claims, **characterised in that** the respective layer (19) of supporting material forms the outer layer and/or at least one inner layer on at least one side of the filter mat (1).

7. The filter material according to any of the preceding claims, **characterised in that** the respective layer (19) of supporting material is made of a fibre base material, preferably of carbon or glass fibre, impregnated with resin.

8. The filter material according to any of the preceding claims, **characterised in that** the base material of the respective layer (19) of the supporting material can consist of a fabric, a hose, continuous fibre threads or rovings.

9. The filter material according to any of the preceding claims, **characterised in that** the respective layer (19) of supporting material can be hardened during the folding process of the filter mat (1) or by applying heat.

10. A method of producing a filter material according to any of Claims 1 to 9, wherein a filter mat (1) preferably consisting of a number of layers is provided with a succession of pleat-like folds (5, 7), **characterised in that** the filter mat (1) is folded together with at least one additional layer (19) made of a reinforcing supporting material.

11. The method according to Claim 10, **characterised in that** the layer (19) consisting of supporting material forms an inner layer of the filter mat (1).

12. The method according to Claim 10 or 11, **characterised in that** a supporting material that is permeable to fluid is used.

13. The method according to any of Claims 10 to 12, **characterised in that** a supporting material is used that is flexurally elastic so that it does not break when folding the filter mat (1).

## Revendications

1. Matière du filtre, notamment pour des installations hydrauliques, ayant une natte (1) de filtre, qui est constituée de plusieurs couches d'un milieu filtrant et qui est pourvue d'une succession de plis (5, 7) de type plissé, dans laquelle, pour sécuriser la géométrie des plis vis-à-vis d'une déformation, il est prévu au moins un moyen (19) de stabilisation attaquant des régions partielles de la natte (1) du filtre, la natte (1) du filtre ayant comme moyen de stabilisation au moins une autre couche (19) pliée en un matériau d'appui rigidifiant, la couche (19) respective du matériau d'appui ayant la forme d'au moins un ruban plat, **caractérisé en ce que** la largeur du ruban ou de plusieurs rubans ensemble est plus petite qu'un quart de la largeur de la natte (1) du filtre mesurée suivant la direction longitudinale des plis.

2. Matière du filtre suivant la revendication 1, **caractérisée en ce qu'**au moins un ruban est disposé au milieu par rapport à la natte (1) du filtre.

3. Matière du filtre suivant la revendication 1 ou 2, **caractérisée en ce que** plusieurs rubans sont répartis symétriquement sur la longueur du filtre.

4. Matière du filtre suivant l'une des revendications précédentes, **caractérisée en ce que** la couche (19) respective du matériau d'appui est perméable à un fluide (5).

5. Matière du filtre suivant l'une des revendications précédentes, **caractérisée en ce que** la couche (19) respective du matériau d'appui est élastique en flexion de manière à ne pas se briser lors du pliage de la natte (1) du filtre.

6. Matière du filtre suivant l'une des revendications précédentes, **caractérisée en ce que** la couche (19) respective du matériau d'appui forme sur au moins une face de la natte du filtre sa couche extérieure et/ou au moins une couche intérieure.

7. Matière du filtre suivant l'une des revendications précédentes, **caractérisée en ce que** la couche (19) respective du matériau d'appui est en un matériau de base en fibre, de préférence en fibre de carbone ou en fibre de verre, imprégné de résine.

8. Matière du filtre suivant l'une des revendications précédentes, **caractérisée en ce que** le matériau de base de la couche (19) respective du matériau de base est constitué d'un tissu, d'une gaine, de fils sans fin ou de rovings.

9. Matière du filtre suivant l'une des revendications précédentes, **caractérisée en ce que** la couche (19) respective du matériau de base peut être durcie lors du pliage de la natte (1) du filtre ou par apport de chaleur.

10. Procédé de fabrication d'une matière du filtre suivant l'une des revendications 1 à 9, dans lequel on munit une natte (1) de filtre, constituée de préférence de plusieurs couches de plis (5, 7) de type en plis se succédant, **caractérisé en ce que** l'on plie la natte (1) du filtre ensemble avec au moins une autre couche (19) en un matériau d'appui rigidifiant.

11. Procédé suivant la revendication 10, **caractérisé en ce que** la couche (19) constituée du matériau d'appui forme une couche intérieure de la natte (1) du filtre.

12. Procédé suivant la revendication 10 ou 11, **caractérisé en ce qu'**on utilise un matériau d'appui perméable à un fluide.

13. Procédé suivant la revendication 10 à 12, **caractérisé en ce qu'**on utilise un matériau d'appui qui est élastique en flexion de manière à ne pas se rompre lors du pliage de la natte (1) du filtre.
